# EUROPÄISCHE PATENTSCHRIFT

(11) **EP 4 056 662 B1**
(45) Veröffentlichungstag und Bekanntmachung des Hinweises auf die Patenterteilung: **11.11.2026**
(21) Anmeldenummer: 22155319.1
(22) Anmeldetag: 07.02.2022
(51) Int. Cl.: C09K 5/06

(54) **PHASENWECHSELMATERIAL-GEL UND VERFAHREN ZUR HERSTELLUNG EINES PHASENWECHSEL-SPEICHERS**
PHASE-CHANGE MATERIAL GEL AND METHOD FOR PRODUCING A PHASE-CHANGE MEMORY
MATIÈRE À CHANGEMENT DE PHASE EN GEL ET PROCÉDÉ DE FABRICATION D'UNE MÉMOIRE À CHANGEMENT DE PHASE

(30) Priorität: 10.03.2021 DE 102021105815
(43) Veröffentlichungstag der Anmeldung: 14.09.2022
(73) Patentinhaber: va-Q-tec Thermal Solutions GmbH, 97080 Würzburg (DE)
(72) Erfinder: Dr. Hörl, Christian, 97074 Würzburg (DE); Dr. Müller-Baum, Kerstin, 97286 Sommerhausen (DE); Dr. Kuhn, Joachim, 97074 Würzburg (DE)
(74) Vertreter: Gleim Petri Patent- und Rechtsanwaltspartnerschaft mbB

(56) Entgegenhaltungen:
- WO-A1-2019/014215
- DE-A1- 10 048 536
- US-A1- 2011 204 280
- US-A1- 2020 231 857
- US-B2- 10 077 389
- US-B2- 9 556 373

## Beschreibung

Die Erfindung umfasst ein Phasenwechselmaterial-Gel und ein Verfahren zur Herstellung eines Phasenwechsel-Speichers nach dem jeweiligen unabhängigen Anspruch.

Phasenwechsel-Materialien, im Folgenden auch PCM (engl. Phase change material) bezeichnet, sind Materialien, die für eine wärmetechnische Anwendung einen Wechsel ihres Aggregatzustands, meist zwischen fest und flüssig, in einem definierten Temperaturbereich nutzen. Durch den Phasenwechsel ist das PCM in der Lage große Wärmemengen latent zu speichern. Der Phasenwechsel ist zudem reversibel nutzbar.

PCMs werden oft dafür eingesetzt Stoffe bei konstanter Temperatur zu lagern und/oder zu transportieren. Beispiele hierfür sind der Transport von Arzneimitteln, wie Impfstoffen, oder Lebensmitteln, welche temperaturempfindlich sind.

Für den temperaturgeführten Transport werden PCMs in Verpackungssysteme integriert, um die temperaturempfindlichen Materialien beispielsweise in einem gewünschten Temperaturbereich zu halten. Die Phasenwechseltemperatur des PCMs wird dabei durch seine Materialzusammensetzung auf diesen Temperaturbereich hin ausgelegt.

Da PCMs meist in einen flüssigen Aggregatszustand übergehen, werden sie typischerweise in einen Behälter eingeschlossen, um Phasenwechsel-Speicher zu bilden.

Den PCMs aus dem Stand der Technik werden typischerweise weitere chemischen Komponenten beigemischt, welche die chemischen und physikalischen Eigenschaften bestimmen. Es hat sich gezeigt, dass durch die Beimischung von thermoplastischen Elastomeren ein Phasenwechselmaterial-Gel entsteht, welches eine Viskosität aufweist, durch die das PCM auslaufsicher und formstabil in Phasenwechsel-Speichern eingesetzt werden kann. Dabei sind aus dem Stand der Technik verschiedene Multi-block Copolymere zum Einsatz als thermoplastische Elastomere bekannt. Die Mischungen sind dabei derart zu wählen, um verschiedene Anforderungen z. B. Synäresehemmung, Auslaufsicherheit, Formstabilität und möglichst hohe latente Wärmespeicherkapazität zu erfüllen.

Beispielsweise offenbart die US 9 556 373 B2 ein Gel mit einem PCM, ein Verfahren zur Herstellung des Gels und einen thermischen Speicher, der das Gel umfasst. Das darin gezeigte PCM kann dabei n-Alkane, wie z.B. n-Tetradecan, n-Hexadecan oder n-Octadecan, umfassen. Es wird ebenfalls offenbart, dass durch die relativen Anteile verschiedener n-Alkane in einer Mischung die Phasenwechseltemperatur eingestellt werden kann. Die Verwendung organischer Geliermittel wird als bevorzugt beschrieben. Dazu gehören insbesondere verschiedene Styrol-Block-Copolymere, wie z.B. der SEP, SEPS, SEBS und SEEPS Familien von Copolymeren.

Weiterhin offenbart die US 9 598 622 B2 ebenfalls wie die US 9 556 373 B2 ein Gel mit einem PCM, ein Verfahren zur Herstellung des Gels und einen thermischen Speicher, der das Gel umfasst. Zudem ist ein Verfahren zur Herstellung eines thermischen Speichers, der das Gel umfasst, gezeigt. Dabei wird die Mischung vor dem Umfüllen in einen Behälter auf Raumtemperatur abgekühlt, um das Gel zu bilden, oder die Mischung wird in einen Behälter umgefüllt anschließend in dem Behälter erhitzt. Dadurch sind beide Verfahren auf einen Temper-Prozess des Phasenwechselmaterial-Gels in dem Behälter nach der Abfüllung angewiesen, um ein homogenes Phasenwechselmaterial-Gel in dem Behälter zu erhalten. Ähnliches ist ebenfalls aus der US 10 077 389 B2 bekannt.

Aus dem Stand der Technik sind ferner die WO 2019/ 014215 A1, die US 2020/231857 A1, US 2011/204280 A1 und DE 100 48 536 A1 bekannt.

Es ist die Aufgabe der vorliegenden Erfindung ein Phasenwechselmaterial-Gel bereitzustellen, welches die Nachteile aus dem Stand der Technik überwindet und insbesondere verbesserte Eigenschaften in Bezug auf Synäresehemmung, Auslaufsicherheit, Formstabilität und möglichst hohe latente Wärmespeicherkapazität erfüllt. Es ist ferner die Aufgabe ein Verfahren zur Herstellung eines Phasenwechsel-Speichers bereitzustellen, welcher die Nachteile aus dem Stand der Technik überwindet und insbesondere ein besonders homogenes Phasenwechselmaterial-Gel umfasst.

Die Erfindung umfasst ein Phasenwechselmaterial-Gel umfassend eine Phasenwechselkomponente und eine thermoplastische Elastomerkomponente. Dabei umfasst die Phasenwechselkomponente n-Alkane und die thermoplastische Elastomerkomponente umfasst ein Gemisch aus zumindest einer Di-Block-Copolymerkomponente und zumindest einer Tri-Block-Copolymerkomponente. Erfindungsgemäß weist das Phasenwechselmaterial-Gel die Di-Block-Copolymerkomponente zu einem Anteil in einem Bereich zwischen 0,2 Gew.-% und 15 Gew.-% auf. Ferner erfindungsgemäß weist das Phasenwechselmaterial-Gel die Tri-Block-Copolymerkomponente zu einem Anteil in einem Bereich zwischen 1,0 Gew.-% und 20 Gew.-% auf.

Die Mischung von zumindest einer Di-Block-Copolymerkomponente mit zumindest einer Tri-Block-Copolymerkomponente für die thermoplastische Elastomerkomponente reduziert dabei einen Synärese-Effekt im Phasenwechselmaterial-Gel im Vergleich zu thermoplastischen Elastomerkomponenten umfassend lediglich Tri-Block-Copolymerkomponenten. Dies erlaubt die Verringerung des Anteils der thermoplastischen Elastomerkomponente in dem Phasenwechselmaterial-Gel und somit die effizientere Speicherung von Latentwärme durch einen höheren Anteil an der Phasenwechselkomponente. Über den relativen Anteil der Tri-Block- und Di-Block-Copolymerkomponenten kann die Formstabilität und Viskosität des Phasenwechselmaterial-Gels eingestellt werden. Dabei kann eine Erhöhung der Formstabilität bzw. Viskosität durch die Erhöhung des Anteils an Tri-Block-Copolymerkomponente erreicht werden.

Nach einem bevorzugten Aspekt umfasst die zumindest eine Di-Block-Copolymerkomponente ein Styrol-Di-Blockcopolymer und die zumindest eine Tri-Block-Copolymerkomponente ein Styrol-Tri-Blockcopolymer.

Nach einem besonders bevorzugten Aspekt ist das Styrol-Di-Blockcopolymer ein Polystyrol-b-Poly(Ethylene/Propylene) Blockcopolymer (SEP). Das SEP trägt besonders zur Reduktion des Synärese-Effekts bei.

Nach einem weiteren bevorzugten Aspekt weist das Styrol-Di-Blockcopolymer einen Polystyrol-Anteil zwischen 28 Gew.-% und 37 Gew.-% auf. Bei einer gegebenen Konzentration des Copolymers kann eine Erhöhung der Viskosität durch Erhöhung des Styrol-Anteils erzielt werden.

Nach einem weiteren vorteilhaften Aspekt umfasst das Styrol-Tri-Blockcopolymer ein Polystyrol-b-Poly(Ethylene/Propylene)-b-Polystyrol (SEPS) Blockcopolymer. Das SEPS erhöht die Elastizität und Formstabilität des Phasenwechselmaterial-Gels.

Nach einem besonders vorteilhaften Aspekt weist das Polystyrol-b-Poly(Ethylene/Propylene)-b-Polystyrol (SEPS) Blockcopolymer einen Polystyrol-Anteil zwischen 20 Gew.-% und 35 Gew.-% auf.

Nach einem bevorzugten Aspekt umfasst das Styrol-Tri-Blockcopolymer ein Polystyrol-b-Poly(Ethylene/Butylene)-b-Polystyrol (SEBS) Blockcopolymer. Das SEBS erhöht die Formstabilität des Phasenwechselmaterial-Gels für höhere Temperaturen im Bereich zwischen 45°C bis 50°C. Nach einem weiteren bevorzugten Aspekt weist das Polystyrol-b-Poly(Ethylene/Butylene)-b-Polystyrol (SEBS) Blockcopolymer einen Polystyrol-Anteil zwischen 30 Gew.-% und 33 Gew.-% auf.

Nach einem besonders bevorzugten Aspekt umfasst die Phasenwechselkomponente ein Gemisch aus n-Alkanen mit 14 ≤ n ≤ 18 umfasst. Die Phasenwechselkomponente kann dabei beispielsweise ein Gemisch aus Tetradekan, Hexadekan und Oktadekan umfassen.

Nach einem besonders vorteilhaften Aspekt weist das Phasenwechselmaterial-Gel die Di-Block-Copolymerkomponente zu einem Anteil in einem Bereich zwischen 0,5 Gew.-% und 3,0 Gew.-% auf.

Nach einem bevorzugten Aspekt weist das Phasenwechselmaterial-Gel die Tri-Block-Copolymerkomponente zu einem Anteil in einem Bereich zwischen 2 Gew.-% und 8 Gew.-% auf.

Besonders bevorzugt umfasst das Phasenwechselmaterialgel ein Nukleierungsmittel, wie lineare Alkohole (1-Tetradecanol, 1-Hexadecanol, 1-Octadecanol). Dabei ist besonders bevorzugt, wenn das Nukleierungsmittel einen Anteil in einem Bereich zwischen 0,5 Gew.-% und 1 Gew.-% aufweist.

Die Erfindung umfasst weiterhin ein Verfahren zur Herstellung eines Phasenwechsel-Speichers umfassend die Verfahrensschritte:
A) Bereitstellen eines Behälters zur Aufnahme eines Phasenwechselmaterial-Gels; und
B) Bereitstellen eines Phasenwechselmaterial-Gels, durch
   B1) Bereitstellen von zumindest einer Phasenwechselkomponente und zumindest einer thermoplastischen Elastomerkomponente; und
   B2) Vermischen der zumindest einen Phasenwechselkomponente und der zumindest einen thermoplastischen Elastomerkomponente zu einem Gemisch; und
   B3) Erhitzen des Gemischs auf eine Temperatur zwischen 75°C und 100°C; und danach
   B4) Halten der Temperatur des Gemischs auf einer Temperatur zwischen 75°C und 100°C für eine Zeit t; und
C) Abfüllen des Phasenwechselmaterial-Gels in den Behälter bei einer Temperatur zwischen 75°C und 100°C, und bevorzugt bei einer Temperatur zwischen 80°C und 95°C; und danach
D) Abkühlen des Phasenwechselmaterial-Gels in dem Behälter.

Indem das Abfüllen des Phasenwechselmaterial-Gels in den Behälter bei einer Temperatur zwischen 75°C und 100°C, und bevorzugt bei einer Temperatur zwischen 80°C und 95°C erfolgt, bleibt die Homogenität des Phasenwechselmaterial-Gels erhalten. Weiterhin ist durch das Abfüllen des Phasenwechselmaterial-Gels in den Behälter bei einer Temperatur zwischen 75°C und 100°C, und bevorzugt bei einer Temperatur zwischen 80°C und 95°C kein weiterer Temper-Prozess des Phasenwechselmaterial-Gels in dem Behälter nach der Abfüllung notwendig. Dies senkt die Energiekosten im Vergleich zur Herstellung eines Phasenwechsel-Speichers, bei welchem ein Temper-Prozess des Phasenwechselmaterial-Gels in dem Behälter nach der Abfüllung erfolgt.

Nach einem bevorzugten Aspekt umfasst der Verfahrensschritt B) das Bereitstellen eines Phasenwechselmaterial-Gels wie oben beschrieben. Ein Phasenwechselmaterial-Gels wie oben umfassend ein Gemisch von zumindest einer Di-Block-Copolymerkomponente mit zumindest einer Tri-Block-Copolymerkomponente für die thermoplastische Elastomerkomponente reduziert einen Synärese-Effekt im Phasenwechselmaterial-Gel im Vergleich zu thermoplastischen Elastomerkomponenten umfassend lediglich Tri-Block-Copolymerkomponenten. Dies erlaubt die Verringerung des Anteils der thermoplastischen Elastomerkomponente in dem Phasenwechselmaterial-Gel und somit die effizientere Speicherung von Latentwärme durch den Phasenwechsel-Speicher.

Nach einem besonders bevorzugten Aspekt erfolgt im Verfahrensschritt B3) das Erhitzen bei einem Temperaturanstieg zwischen 1°C/min und 4°C/min.

Nach einem vorteilhaften Aspekt erfolgt im Verfahrensschritt B3) das Erhitzen bei einem konstanten oder nicht-konstanten Temperaturanstieg.

Nach einem besonders vorteilhaften Aspekt erfolgt der Verfahrensschritt B2) bei einer Temperatur zwischen 15°C und 30°C, und bevorzugt bei einer Temperatur zwischen 20°C und 25°C. Das Vermischen der zumindest einen Phasenwechselkomponente und der zumindest einen thermoplastischen Elastomerkomponente bei einer Temperatur zwischen 15°C und 30°C, und bevorzugt bei einer Temperatur zwischen 20°C und 25°C senkt die Energiekosten bei der Herstellung des Phasenwechsel-Speichers.

Nach einem bevorzugten Aspekt beträgt die Zeit t in Verfahrensschritt B4) zwischen 10 min und 60 min, bevorzugt zwischen 20 min und 45 min. Diese Zeit ist derart bemessen, um die erforderliche Homogenität des Phasenwechselmaterial-Gels zu gewährleisten.

Nach einem weiteren bevorzugten Aspekt umfasst der Verfahrensschritt D), dass der Behälter während des Abkühlens des Phasenwechselmaterial-Gels in ruhender Position verbleibt. Das Verfahren hat damit den Vorteil, dass der Behälter nicht in irgendeiner Art während des Abkühlens bewegt werden muss, um einen Phasenwechsel-Speicher mit homogenem Phasenwechselmaterial-Gel bereitzustellen. Ein weiterer Vorteil ist, dass das Gel mittels dieses Prozesses bereits nach dem Aufheizen homogen ausgebildet ist und auch während des Abkühlens unabhängig von der Lagerung keine Inhomogenitäten entstehen.

Im Folgenden wird die Erfindung anhand von Zeichnungen näher erläutert. Es zeigen:
- Fig. 1: Schematisches Diagramm eines erfindungsgemäßen Verfahrens zur Herstellung eines Phasenwechsel-Speichers; und
- Fig. 2: Schematische Abbildung eines Rührgefäßes mit Propellerrührer und Heizplatte.

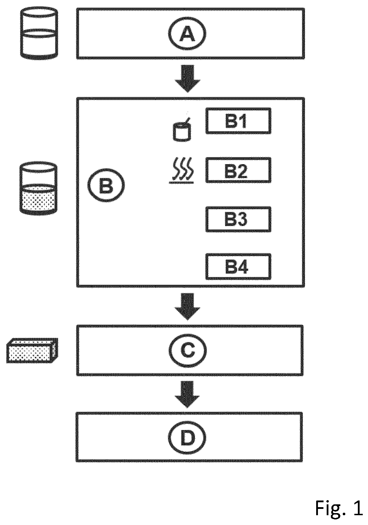

Das in **Fig. 1** gezeigte schematisches Diagramm eines erfindungsgemäßen Verfahrens zur Herstellung eines Phasenwechsel-Speichers umfasst die Verfahrensschritte:
A) Bereitstellen eines Behälters zur Aufnahme eines Phasenwechselmaterial-Gels. Ein Behälter zur Aufnahme eines Phasenwechselmaterial-Gels kann dabei typischerweise ein Behälter aus Kunststoff in der Form eines flächigen Hohlkörpers sein.

Nach Verfahrensschritt A) folgt:
B) Bereitstellen eines Phasenwechselmaterial-Gels.

Verfahrensschritt B) umfasst die Schritte B1) - B4):
B1) Bereitstellen von zumindest einer Phasenwechselkomponente und zumindest einer thermoplastischen Elastomerkomponente. Dabei ist im gezeigten Beispiel die Phasenwechselkomponente ein Gemisch aus n-Alkanen (14 ≤ n ≤ 18). Die thermoplastische Elastomerkomponente umfasst ein Gemisch aus einem Styrol-Di-Blockcopolymer als Di-Block-Copolymerkomponente und einem Styrol-Tri-Blockcopolymer als Tri-Block-Copolymerkomponente.

Die Mischung von zumindest einer Di-Block-Copolymerkomponente mit zumindest einer Tri-Block-Copolymerkomponente für die thermoplastische Elastomerkomponente reduziert dabei einen Synärese-Effekt im Phasenwechselmaterial-Gel im Vergleich zu thermoplastischen Elastomerkomponenten umfassend lediglich Tri-Block-Copolymerkomponenten. Dies erlaubt die Verringerung des Anteils der thermoplastischen Elastomerkomponente in dem Phasenwechselmaterial-Gel und somit die effizientere Speicherung von Latentwärme durch einen höheren Anteil an der Phasenwechselkomponente.

In Tabelle 1 und 2 sind experimentell ermittelte Werte zur Synärese verschiedener erfindungsgemäßer Zusammensetzungen der thermoplastischen Elastomerkomponente zusammengefasst:

**Tabelle 1**

| Zusammensetzung | Synärese [%] |
|---|---|
| 5% SEBS | 6,8 |
| 6% SEBS | 2,5 |
| 7% SEBS | 0,8 |
| 4% SEBS + 1% SEP | 7,2 |
| 5% SEBS + 1% SEP | 2,6 |
| 6% SEBS + 1% SEP | 0,5 |
| 4% SEPS + 1% SEP | 5,5 |
| 5% SEPS + 1% SEP | 0,2 |
| 6% SEPS + 1% SEP | nicht messbar |

**Tabelle 2**

| Zusammensetzung | Synärese [%] |
|---|---|
| 4% SEBS + 0,5 - 2% SEP | 5 - 8 |
| 5% SEBS + 0,5 - 2% SEP | 2 - 3 |
| 6% SEBS + 0,5 - 2% SEP | 0,1 - 2 |
| 4% SEPS + 0,5 - 2% SEP | 3 - 6 |
| 5% SEPS + 0,5 - 2% SEP | 0,1 - 0,2 |
| 6% SEPS + 0,5 - 2% SEP | nicht messbar |

Über den relativen Anteil der Tri-Block- und Di-Block-Copolymerkomponenten kann die Formstabilität und Viskosität des Phasenwechselmaterial-Gels eingestellt werden. Dabei kann eine Erhöhung der Formstabilität bzw. Viskosität durch die Erhöhung des Anteils an Tri-Block-Copolymerkomponente erreicht werden.

In dem gezeigten Verfahren ist das Styrol-Di-Blockcopolymer ein Polystyrol-b-Poly(Ethylene/Propylene) Blockcopolymer (SEP). Das SEP trägt besonders zur Reduktion des Synärese-Effekts bei. Das Styrol-Di-Blockcopolymer weist einen Polystyrol-Anteil zwischen 28 Gew.-% und 37 Gew.-% auf. Durch den anpassbaren Polystyrol-Anteil kann die Viskosität eingestellt werden, da bei einer gegebenen Konzentration des Copolymers eine Erhöhung der Viskosität durch Erhöhung des Styrol-Anteils erzielt wird.

Das Styrol-Tri-Blockcopolymer ist dabei ausgewählt aus einem Polystyrol-b-Poly(Ethylene/Propylene)-b-Polystyrol (SEPS) Blockcopolymer oder einem Polystyrol-b-Poly(Ethylene/Butylene)-b-Polystyrol (SEBS) Blockcopolymer. Das SEPS erhöht die Elastizität und Formstabilität des Phasenwechselmaterial-Gels und weist einen Polystyrol Anteil zwischen 20 Gew.-% und 35 Gew.-% auf. Das SEBS erhöht die Formstabilität des Phasenwechselmaterial-Gels für höhere Temperaturen im Bereich zwischen 45°C bis 50°C und weist einen Polystyrol-Anteil zwischen 30 Gew.-% und 33 Gew.-% auf.

Nach Schritt B1) folgt:
B2) Vermischen der Phasenwechselkomponente und der thermoplastischen Elastomerkomponente zu einem Gemisch. Das Vermischen erfolgt bei einer Temperatur zwischen 15°C und 30°C.

Nach Schritt B2) folgt:
B3) Erhitzen des Gemischs auf eine Temperatur zwischen 75°C und 100°C. Das Erhitzen erfolgt bei einem Temperaturanstieg zwischen 1°C/min und 4°C/min.

Nach Schritt B3) folgt:
B4) Halten der Temperatur des Gemischs auf einer Temperatur zwischen 75°C und 100°C für eine Zeit t. Dabei beträgt die Zeit t zwischen 10 min und 60 min, um die erforderliche Homogenität des Phasenwechselmaterial-Gels zu gewährleisten.

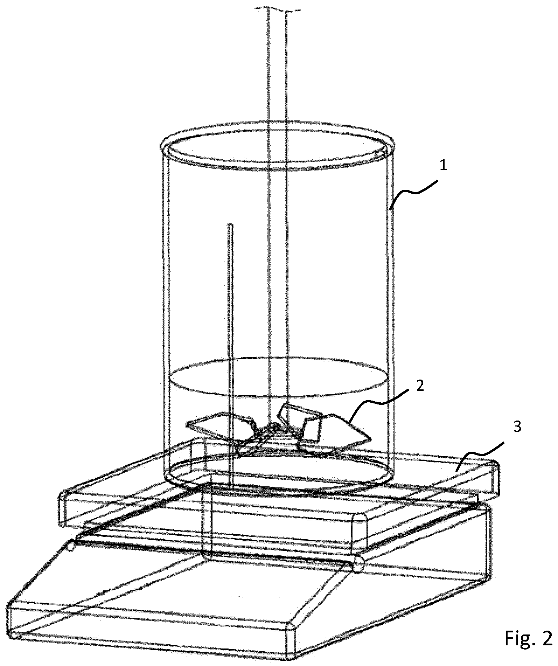

Die Schritte B1), B2), B3) und B4) erfolgen mit Hilfe eines in Fig. 2 gezeigten Rührgefäßes 1 mit Propellerrührer 2 und Heizplatte 3.

Nach Verfahrensschritt B) folgt:
C) Abfüllen des Phasenwechselmaterial-Gels in den Behälter bei einer Temperatur zwischen 75°C und 100°C. Indem das Abfüllen des Phasenwechselmaterial-Gels in den Behälter bei einer Temperatur zwischen 75°C und 100°C erfolgt, bleibt die Homogenität des Phasenwechselmaterial-Gels erhalten. Weiterhin ist durch das Abfüllen des Phasenwechselmaterial-Gels in den Behälter bei einer Temperatur zwischen 75°C und 100°C kein weiterer Temper-Prozess des Phasenwechselmaterial-Gels in dem Behälter nach der Abfüllung notwendig.

Nach Verfahrensschritt C) folgt:
D) Abkühlen des Phasenwechselmaterial-Gels in dem Behälter. Während des Abkühlens des Phasenwechselmaterial-Gels verbleibt der Behälter in ruhender Position. Das Verfahren hat damit den Vorteil, dass der Behälter nicht in irgendeiner Art während des Abkühlens bewegt werden muss, um einen Phasenwechsel-Speicher mit homogenem Phasenwechselmaterial-Gel bereitzustellen. Ein weiterer Vorteil ist, dass das Gel mittels dieses Prozesses bereits nach dem Aufheizen homogen ausgebildet ist und auch während des Abkühlens unabhängig von der Lagerung keine Inhomogenitäten entstehen.

**Fig. 2** zeigt eine schematische Abbildung eines Rührgefäßes 1 mit Propellerrührer 2 und Heizplatte 3. Dabei ist das Rührgefäß 1 ein handelsübliches Becherglas mit 100 mm Durchmesser in dem der Propellerrührer 2 angeordnet ist. Das Rührgefäß 1 steht dabei auf der Heizplatte 3, welche eine Regelung der Temperatur während des Verfahrens erlaubt.

Für die erfindungsgemäßen Schritte B1), B2), B3) und B4) wird das Rührgefäß 1 bis zu einer Höhe von maximal 40 mm mit der zu mischenden Phasenwechselkomponente und thermoplastischen Elastomerkomponente befüllt und mittels Propellerrührer 2 verrührt. Der Propellerrührer 2 hat einen Durchmesser von 88,5 mm. Während des Heizvorgangs durch die Heizplatte 3 wird die Suspension mit 200 bis 500 Umdrehungen pro Minute bis zur vollständigen Homogenität vermischt.

## Patentansprüche

1. Phasenwechselmaterial-Gel umfassend eine Phasenwechselkomponente und eine thermoplastische Elastomerkomponente, wobei die Phasenwechselkomponente n-Alkane umfasst und die thermoplastische Elastomerkomponente ein Gemisch aus zumindest einer Di-Block-Copolymerkomponente und zumindest einer Tri-Block-Copolymerkomponente umfasst, wobei das Phasenwechselmaterial-Gel die Di-Block-Copolymerkomponente zu einem Anteil in einem Bereich zwischen 0,2 Gew.-% und 15 Gew.-% aufweist, wobei das Phasenwechselmaterial-Gel die Tri-Block-Copolymerkomponente zu einem Anteil in einem Bereich zwischen 1,0 Gew.-% und 20 Gew.-% aufweist.

2. Phasenwechselmaterial-Gel nach Anspruch 1, wobei die zumindest eine Di-Block-Copolymerkomponente ein Styrol-Di-Blockcopolymer, und wobei die zumindest eine Tri-Block-Copolymerkomponente ein Styrol-Tri-Blockcopolymer umfasst.

3. Phasenwechselmaterial-Gel nach Anspruch 2, wobei das Styrol-Di-Blockcopolymer ein Polystyrol-b-Poly(Ethylene/Propylene) Blockcopolymer (SEP) ist.

4. Phasenwechselmaterial-Gel nach Anspruch 3, wobei das Styrol-Di-Blockcopolymer einen Polystyrol-Anteil zwischen 28 Gew.-% und 37 Gew.-% aufweist.

5. Phasenwechselmaterial-Gel nach einem der Ansprüche 2 bis 4, wobei die Styrol-Tri-Blockcopolymer ein Polystyrol-b-Poly(Ethylene/Propylene)-b-Polystyrol (SEPS) Blockcopolymer umfasst.

6. Phasenwechselmaterial-Gel nach Anspruch 5, wobei das Polystyrol-b-Poly(Ethylene/Propylene)-b-Polystyrol (SEPS) Blockcopolymer einen Polystyrol-Anteil zwischen 20 Gew.-% und 35 Gew.-% aufweist.

7. Phasenwechselmaterial-Gel nach einem der Ansprüche 2 bis 6, wobei das Styrol-Tri-Blockcopolymer ein Polystyrol-b-Poly(Ethylene/Butylene)-b-Polystyrol (SEBS) Blockcopolymer umfasst.

8. Phasenwechselmaterial-Gel nach Anspruch 7, wobei das Polystyrol-b-Poly(Ethylene/Butylene)-b-Polystyrol (SEBS) Blockcopolymer einen Polystyrol-Anteil zwischen 30 Gew.-% und 33 Gew.-% aufweist.

9. Phasenwechselmaterial-Gel nach einem der vorangehenden Ansprüche, wobei die Phasenwechselkomponente ein Gemisch aus n-Alkanen mit 14 ≤ n ≤ 18 umfasst.

10. Phasenwechselmaterial-Gel nach einem der vorangehenden Ansprüche, wobei das Phasenwechselmaterial-Gel die Di-Block-Copolymerkomponente zu einem Anteil in einem Bereich zwischen 0,5 Gew.-% und 3,0 Gew.-% aufweist.

11. Phasenwechselmaterial-Gel nach einem der vorangehenden Ansprüche, wobei das Phasenwechselmaterial-Gel die Tri-Block-Copolymerkomponente zu einem Anteil in einem Bereich zwischen 2 Gew.-% und 8 Gew.-% aufweist.

12. Phasenwechselmaterial-Gel nach einem der vorangehenden Ansprüche, wobei die Phasenwechselkomponente ein Nukleierungsmittel umfasst.

13. Verfahren zur Herstellung eines Phasenwechsel-Speichers umfassend die Verfahrensschritte:
A) Bereitstellen eines Behälters zur Aufnahme eines Phasenwechselmaterial-Gels; und
B) Bereitstellen eines Phasenwechselmaterial-Gels, durch
B1) Bereitstellen von zumindest einer Phasenwechselkomponente und zumindest einer thermoplastischen Elastomerkomponente; und
B2) Vermischen der zumindest einen Phasenwechselkomponente und der zumindest einen thermoplastischen Elastomerkomponente zu einem Gemisch; und
B3) Erhitzen des Gemischs auf eine Temperatur zwischen 75°C und 100°C; und danach
B4) Halten der Temperatur des Gemischs auf einer Temperatur zwischen 75°C und 100°C für eine Zeit t; und
C)Abfüllen des Phasenwechselmaterial-Gels in den Behälter bei einer Temperatur zwischen 75°C und 100°C, und bevorzugt bei einer Temperatur zwischen 80°C und 95°C; und danach
D)Abkühlen des Phasenwechselmaterial-Gels in dem Behälter.

14. Verfahren nach Anspruch 13, wobei der Verfahrensschritt B) das Bereitstellen eines Phasenwechselmaterial-Gels nach einem der vorangehenden Ansprüche 1 - 12 umfasst.

15. Verfahren nach einem der Ansprüche 13 bis 14, wobei im Verfahrensschritt B3) das Erhitzen bei einem Temperaturanstieg zwischen 1°C/min und 4°C/min erfolgt.

16. Verfahren nach einem der Ansprüche 13 bis 14, wobei im Verfahrensschritt B3) das Erhitzen bei einem konstanten oder nicht-konstanten Temperaturanstieg erfolgt.

17. Verfahren nach einem der Ansprüche 13 bis 15, wobei der Verfahrensschritt B2) bei einer Temperatur zwischen 15°C und 30°C, und bevorzugt bei einer Temperatur zwischen 20°C und 25°C erfolgt.

18. Verfahren nach einem der Ansprüche 13 bis 16, wobei die Zeit t in Verfahrensschritt B4) zwischen 10 min und 30 min, bevorzugt zwischen 20 min und 25 min beträgt.

## Claims

1. Phase-change material gel comprising a phase-change component and a thermoplastic elastomer component, wherein the phase-change component comprises n-alkanes and the thermoplastic elastomer component comprises a mixture of at least one di-block copolymer component and at least one tri-block copolymer component, wherein the phase-change material gel comprises the di-block copolymer component in a proportion ranging from 0.2% by weight to 15% by weight, and the phase-change material gel comprises the tri-block copolymer component in a proportion ranging from 1.0% by weight to 20% by weight.

2. Phase-change material gel according to claim 1, wherein the at least one di-block copolymer component comprises a styrene di-block copolymer, and wherein the at least one tri-block copolymer component comprises a styrene tri-block copolymer.

3. Phase-change material gel according to claim 2, wherein the styrene di-block copolymer is a polystyrene-b-poly(ethylene/propylene) block copolymer (SEP).

4. Phase-change material gel according to claim 3, wherein the styrene di-block copolymer has a polystyrene proportion of between 28% by weight and 37% by weight.

5. Phase-change material gel according to any one of claims 2 through 4, wherein the styrene tri-block copolymer comprises a polystyrene-b-poly(ethylene/propylene)-b-polystyrene (SEPS) block copolymer.

6. Phase-change material gel according to claim 5, wherein the polystyrene-b-poly(ethylene/propylene)-b-polystyrene (SEPS) block copolymer has a polystyrene proportion of between 20% by weight and 35% by weight.

7. Phase-change material gel according to any one of claims 2 through 6, wherein the styrene tri-block copolymer comprises a polystyrene-b-poly(ethylene/butylene)-b-polystyrene (SEBS) block copolymer.

8. Phase-change material gel according to claim 7, wherein the polystyrene-b-poly(ethylene/butylene)-b-polystyrene (SEBS) block copolymer has a polystyrene proportion of between 30% by weight and 33% by weight.

9. Phase-change material gel according to any one of the preceding claims, wherein the phase-change component comprises a mixture of n-alkanes, where 14 ≤ n ≤ 18.

10. Phase-change material gel according to any one of the preceding claims, wherein the phase-change material gel comprises the di-block copolymer component in a proportion ranging from 0.5% by weight to 3.0% by weight.

11. Phase-change material gel according to any one of the preceding claims, wherein the phase-change material gel comprises the tri-block copolymer component in a proportion ranging from 2% by weight to 8% by weight.

12. Phase-change material gel according to any one of the preceding claims, wherein the phase-change component comprises a nucleating agent.

13. Method for producing a phase-change storage comprising the process steps of:
A) providing a container for holding a phase-change material gel; and
B) providing a phase-change material gel by
B1) providing at least one phase-change component and at least one thermoplastic elastomer component; and
B2) mixing the at least one phase-change component and the at least one thermoplastic elastomer component to form a mixture; and
B3) heating the mixture to a temperature between 75°C and 100°C; and thereafter
B4) maintaining the temperature of the mixture at a temperature between 75°C and 100°C for a time t; and
C) filling the container with the phase-change material gel at a temperature between 75°C and 100°C, and preferably at a temperature between 80°C and 95°C; and thereafter
D) cooling the phase-change material gel in the container.

14. Method according to claim 13, wherein process step B) comprises providing a phase-change material gel according to any one of the preceding claims 1 through 12.

15. Method according to any one of claims 13 through 14, wherein, in process step B3), the heating is performed at a temperature increase of between 1°C/min and 4°C/min.

16. Method according to any one of claims 13 through 14, wherein, in process step B3), the heating is performed at a constant or non-constant temperature increase.

17. Method according to any one of claims 13 through 15, wherein process step B2) is carried out at a temperature of between 15°C and 30°C, and preferably at a temperature of between 20°C and 25°C.

18. Method according to any one of claims 13 through 16, wherein the time t in process step B4) is between 10 min and 30 min, preferably between 20 min and 25 min.

## Revendications

1. Gel à matériau à changement de phase comprenant un composant à changement de phase et un composant élastomère thermoplastique, dans lequel le composant à changement de phase comprend des n-alcanes et le composant élastomère thermoplastique comprend un mélange d'au moins un composant copolymère dibloc et d'au moins un composant copolymère tribloc, dans lequel le gel à matériau à changement de phase comprend le composant copolymère dibloc en une proportion comprise entre 0,2 % en poids et 15 % en poids, et le gel à matériau à changement de phase comprend le composant copolymère tribloc en une proportion comprise entre 1,0 % en poids et 20 % en poids.

2. Gel à matériau à changement de phase selon la revendication 1, dans lequel le au moins un composant copolymère dibloc comprend un copolymère dibloc de styrène, et dans lequel le au moins un composant copolymère tribloc comprend un copolymère tribloc de styrène.

3. Gel à matériau à changement de phase selon la revendication 2, dans lequel le copolymère dibloc de styrène est un copolymère à blocs polystyrène-b-poly(éthylène/propylène) (SEP).

4. Gel à matériau à changement de phase selon la revendication 3, dans lequel le copolymère dibloc de styrène présente une proportion de polystyrène comprise entre 28 % en poids et 37 % en poids.

5. Gel à matériau à changement de phase selon l'une quelconque des revendications 2 à 4, dans lequel le copolymère tribloc de styrène comprend un copolymère à blocs polystyrène-b-poly(éthylène/propylène)-b-polystyrène (SEPS).

6. Gel à matériau à changement de phase selon la revendication 5, dans lequel le copolymère à blocs polystyrène-b-poly(éthylène/propylène)-b-polystyrène (SEPS) présente une proportion de polystyrène comprise entre 20 % en poids et 35 % en poids.

7. Gel à matériau à changement de phase selon l'une quelconque des revendications 2 à 6, dans lequel le copolymère tri-bloc de styrène comprend un copolymère à blocs polystyrène-b-poly(éthylène/butylène)-b-polystyrène (SEBS).

8. Gel à matériau à changement de phase selon la revendication 7, dans lequel le copolymère à blocs polystyrène-b-poly(éthylène/butylène)-b-polystyrène (SEBS) présente une proportion de polystyrène comprise entre 30 % en poids et 33 % en poids.

9. Gel à matériau à changement de phase selon l'une quelconque des revendications précédentes, dans lequel le composant à changement de phase comprend un mélange de n-alcanes où 14 ≤ n ≤ 18.

10. Gel à matériau à changement de phase selon l'une quelconque des revendications précédentes, dans lequel le gel à matériau à changement de phase comprend le composant copolymère dibloc dans une proportion comprise entre 0,5 % en poids et 3,0 % en poids.

11. Gel à matériau à changement de phase selon l'une quelconque des revendications précédentes, dans lequel le gel à matériau à changement de phase comprend le composant copolymère tribloc dans une proportion comprise entre 2 % en poids et 8 % en poids.

12. Gel à matériau à changement de phase selon l'une quelconque des revendications précédentes, dans lequel le composant à changement de phase comprend un agent de nucléation.

13. Procédé de fabrication d'un accumulateur de chaleur à changement de phase comprenant les étapes suivantes :
A) fournir un récipient destiné à contenir un gel à matériau à changement de phase ; et
B) fournir un gel à matériau à changement de phase par
B1) la fourniture d'au moins un composant à changement de phase et d'au moins un composant élastomère thermoplastique ; et
B2) mélanger ledit au moins un composant à changement de phase et ledit au moins un composant élastomère thermoplastique pour former un mélange ; et
B3) le chauffage du mélange à une température comprise entre 75 °C et 100 °C ; puis
B4) maintenir la température du mélange entre 75 °C et 100 °C pendant une durée t ;et
C) remplir le récipient avec le gel à matériau à changement de phase à une température comprise entre 75 °C et 100 °C, et de préférence à une température comprise entre 80 °C et 95 °C ; puis
D) refroidir le gel à matériau à changement de phase dans le récipient.

14. Procédé selon la revendication 13, dans lequel l'étape B) du procédé comprend la mise à disposition d'un gel à matériau à changement de phase selon l'une quelconque des revendications 1 à 12 précédentes.

15. Procédé selon l'une quelconque des revendications 13 à 14, dans lequel, à l'étape B3) du procédé, le chauffage est effectué à une vitesse de montée en température comprise entre 1 °C/min et 4 °C/min.

16. Procédé selon l'une quelconque des revendications 13 à 14, dans lequel, à l'étape B3) du procédé, le chauffage est effectué à une vitesse de montée en température constante ou non constante.

17. Procédé selon l'une quelconque des revendications 13 à 15, dans lequel l'étape B2) est réalisée à une température comprise entre 15 °C et 30 °C, et de préférence à une température comprise entre 20 °C et 25 °C.

18. Procédé selon l'une quelconque des revendications 13 à 16, dans lequel la durée t de l'étape B4) est comprise entre 10 min et 30 min, de préférence entre 20 min et 25 min.
